# EUROPEAN PATENT SPECIFICATION

(11) **EP 1 798 093 B1**
(45) Date of publication and mention of the grant of the patent: **18.02.2009**
(21) Application number: 05027354.9
(22) Date of filing: 14.12.2005
(51) Int. Cl.: B60K 7/00, B60L 15/20, B60K 6/48, B60K 6/52

(54) **Electromechanical differential module for a wheeled vehicle and a wheeled vehicle equipped with such an electromechanical differential module**
Elektromechanisches Differentialmodul für ein Radfahrzeug und Radfahrzeug mit einem solchen Differentialmodul
Module de différentiel électromécanique pour véhicule à roues et véhicule à roues à différentiel électromécanique

(43) Date of publication of application: 20.06.2007
(73) Proprietor: Fondazione Torino Wireless, 10129 Torino (IT); POLITECNICO DI TORINO, 10129 Torino (IT)
(72) Inventor: Tonoli, Andrea, Avigliana (Torino) (IT); Festini, Andrea, Collegno (Torino) (IT); Cavalli, Fabio, Alessandria (IT); Carabelli, Stefano, Cesana Torinese (Torino) (IT); Chiaberge, Marcello, Collegno (Torino) (IT)
(74) Representative: Grünecker, Kinkeldey, Stockmair & Schwanhäusser Anwaltssozietät

(56) References cited:
- WO-A-00/32462
- WO-A-01/76902
- DE-A1- 4 446 219
- US-A1- 2005 056 475
- US-A1- 2005 140 230

## Description

### FIELD OF THE PRESENT INVENTION

The present invention relates to the field of automotive applications. In particular, the present invention relates to a differential for wheeled vehicles and a wheeled vehicle equipped with such a differential. In more details, the present invention relates to an electromechanical differential module realized by driving both wheels of a common axle by means of a corresponding electric motor. Still in more detail, the present invention relates to an electromechanical differential module allowing to transfer traction power between the two wheels of the same axle, so as to realize the active control of the torque on the wheels of the same axle, for example by increasing the torque on one wheel and decreasing the torque on the other wheel. Furthermore, the present invention relates to an electromechanical differential module, wherein power may be transferred within the two wheels of a common axle without the involvement of the battery of the vehicle.

### DESCRIPTION OF THE PRIOR ART

Mechanical differentials have been used in automotive applications since the beginning of the automotive industry. In particular, the differential gear represents an essential mechanical part of an automobile and/or other vehicles, the primary function of which is that of transmitting the power generated by the engine to the driving wheels. In the case of a vehicle with a single driving axle, the differential is installed between the wheels and the engine to differentiate the speed of the two wheels during cornering. Moreover, a further important function of a differential gear is that of allowing the two wheels of a common axle to be driven with the same torque, regardless of the speed. However, if one wheel begins to slip while the other maintains traction, the slipping wheel will be able to transmit a torque smaller than that transmitted by the other wheel; accordingly, the differential will act so as to reduce the torque supplied to the non-slipping wheel, resulting in the two wheels transmitting the same torque to the ground, regardless of the potentiality of the non-slipping wheel to transmit a higher torque. This means that if one wheel is spinning (for instance on ice or snow) while the other is still in contact with the surface of the road, acceleration of the driving shaft will only cause the spinning wheel to spin faster and very little torque will reach the wheel with good traction. Similarly, if one wheel is lifted off the ground, for instance because of the centrifugal force acting on the center of gravity of the vehicle during fast cornering, the wheel tracking the inside part of the turn is subject to a vertical load that is smaller than that on the outside wheel, resulting in a reduced capability to transmit torque to the ground, with this wheel (the inside wheel) reaching limit slip conditions earlier than the outside wheel. Again, a corresponding reduced torque will also be supplied by the differential to the outside wheel, and still regardless of its potentiality and/or capability to transmit a much higher torque to the ground so that the vehicle will loose traction. Accordingly, many efforts have been devoted in the past to the development of differential gears allowing to maintain traction even when one of the two wheels of a common axle begins to slip. In particular, in this respect, many solutions have been proposed in the past such as, for example, "limited slip differentials", wherein a portion of the torque is transferred from the wheel with lower traction capability to that with higher traction capability, along with other solutions comprising in particular, both passive and active differentials. In the case of limited slip differentials, such as, for example, the "Torsen differential", the amount of torque transferred from a wheel to the other cannot be modified during operation. On the contrary, in the case of active differentials, the amount of torque transferred from a wheel to the other can be controlled by means of a suitable signal coming from the vehicle dynamic control system. In particular, active differentials usually comprise a standard differential and a clutch system that can transfer a certain amount of torque directly from the input shaft to the two output shafts. The amount of torque transferred by the clutches is modified by an electro hydraulic or an electromagnetic system. Other solutions are also known, wherein the torque is transferred by means of hydraulic pumps and motors instead of clutches.

The most important drawback affecting both limited slip and active differentials of the kind known in the art relate to their mechanical complexity and the small improvement in the driving performances and drive feeling that they allow under normal operating conditions. The result is that their use is limited to high-end vehicles where the higher cost can be justified.

Overcoming the drawbacks affecting the prior art mechanical differential gears has revealed to be a very difficult tasks for the car manufacturers; nevertheless, some results have been obtained thanks to the development of the hybrid vehicles, i.e. of vehicles wherein the driving function is exploited by both a main engine (for instance a combustion engine) and electric motors. In particular, examples of hybrid vehicles are known in the art, wherein in addition to a main combustion engine adapted to drive the front wheels, there is provided an electric motor associated with each of the real wheels; in this case, the operative state of the vehicle is sensed and signals are passed to a control arrangement by which the electric motors are independently driven and improved driving characteristics of the vehicle are obtained. Moreover, when the electric motors are not operated they may be drivingly disconnected from the associated wheel.

However, If it can be appreciated that the driving performances were improved in the case of hybrid vehicles, it has also to be noted that the solutions proposed are still affected by several disadvantages. In particular, it came out that the torque may not be efficiently transferred between the two wheels driven by the electric motors; accordingly, the known solutions may not adequately and reliably exploit the function of a differential, so that a mechanical differential is still needed. Another important drawback affecting the hybrid solutions known in the art relates to the fact that these solutions do not allow to adopt a single module implementing both the traction and differential functions.

Examples of prior art electromechanical modules can be found in each of documents DE 4446219 and WO 01/76902.

In view of the problems and/or drawbacks identified above, it is an object of the present invention to provide a differential module allowing to overcome the drawbacks affecting the prior art devices, namely both the mechanical and electromechanical prior art devices. Moreover, it is an object of the present invention to provide an electromechanical differential module for a wheeled vehicle allowing an efficient and reliable transfer of the power between the wheels of a common axle, so as to realize an active control of the torque on these wheels. Still a further object of the present invention is that of providing an electromechanical differential module allowing to increase the transmission efficiency and a full vehicle dynamic control on a single axle. Still a further object of the present invention is that of providing an electromechanical differential module allowing to improve the safety and the driving feeling. Still a further object of the present invention is that of providing an electromechanical differential module permitting to eliminate the mechanical differential, thus increasing the efficiency of the transmission and the fuel consumption. A further object of the present invention is that of providing an electromechanical differential module allowing to be used in both hybrid and electric vehicles. Finally, a further object of the present invention is that of providing an electromechanical differential module comprising electric motors which can be used for providing the torque needed to drive the vehicle and which can be controlled independently to differentiate the speed of the wheels during cornering.

### SUMMARY OF THE PRESENT INVENTION

To this end, according to the present invention, this is obtained by providing an electromechanical differential module for a wheeled vehicle comprising at least two electric motors each adapted to drive a wheel of said vehicle, wherein at least part or all the electric power can be transferred between said two electrical motors. The possibility to transfer electric power between the two electric motors allows to control the torque transmitted to each wheel, thus obtaining the functionality of an active differential. By means of an opportune control system. The traction of each single wheel can be controlled so that an improved vehicle dynamic control may also be obtained, together with an improved safety of the vehicle. Moreover, it is possible to realize an all wheel drive vehicle with a full vehicle dynamic control that operates independently on each wheel. Furthermore, the implementation of the electric differential in a three-wheel vehicle with two electrically driven wheels improves the safety of the vehicle in a curve.

In particular, according to the present invention, there is provided an electromechanical differential module as claimed in claim 1, namely an electromechanical module for a wheeled vehicle comprising at least two wheels disposed on a common axle, wherein said module comprises at least two electric motors each adapted to be mechanically coupled to one of said at least two wheels so as to drive said one wheel; moreover, said module further comprises means alternatively collecting electrical power during catering from the motor connected to the internal wheel and at least partially supplying the collected electrical power directly to the motor connected to the external wheel so as to alternatively drive said two motors.

According to the present invention, there is also provided an electromechanical differential module as claims in claim 2, namely an electromechanical module wherein the electrical power collected from one of said two motors and supplied to the other one of said two motors, essentially corresponds to the electrical power generated by said motor.

Still according to the present invention, there is provided an electromechanical differential module as claimed in claim 8, namely an electromechanical module wherein said means for alternatively collecting electrical power from one of said two motors and for supplying the collected electrical power to the other one of said two motors comprise at least two power electronic units, each of said at least two power electronic units being electrically connected to one of said two motors.

According to the present invention there is also provided an electromechanical differential module as claimed in claim 13, namely an electromechanical module that further comprises a control unit electrically connected to each of said power electronic units and adapted to control the function of said power electronic units.

Still according to the present invention there is also provided an electromechanical differential module as claimed in claim 15 namely an electromechanical module that further comprises sensing means adapted to collect data relating to the driving characteristics of the vehicle exploiting said module and to supply said data to said control unit.

There is also provided a wheeled vehicle as claimed in claim 17, namely a wheeled vehicle comprising at least two wheels and equipped with an electrical differential module according to the present invention.

Further embodiments and/or details of the present invention are defined in the dependent claims.

As it will become more apparent with the following disclosure, the principle on which the present invention is based relates to the fact that a differential function may be obtained by independently driving the two wheels disposed on the axle of a vehicle. In particular, the present invention is based on the principle that said two wheels may be driven independently by coupling each of said two wheels with a corresponding electric motor and by independently providing these two motors with electrical power. In more details, the present invention is based on the principle that electrical power may be independently and alternatively collected from each of said two electrical motors and transferred to the other one of said two motors. In this way, the power collected from one motor can be transferred to the other motor without involving the battery and/or any other storage means in the power exchange, resulting in the possibility of transferring torque between the two wheels.

### BRIEF DESCRIPTION OF THE DRAWINGS

In the following, a description will be given with reference to the drawings of particular and/or preferred embodiments of the present invention; it has, however, to be noted that the present invention is not limited to the embodiments disclosed but that the embodiments disclosed only relate to particular examples of the present invention, the scope of which is defined by the appended claims. In particular, in the drawings:
figure 1 relates to a schematic view of a first embodiment of the differential module according to the present invention;
figure 2 relates to a schematic view of a further embodiment of the differential module according to the present invention;
figure 3 relates to a schematic view of a solution adapted to be implemented in the differential module according to the present invention;
figure 4 relates to the electrical layout of the differential module according to the embodiment of the present invention depicted in figure 2;
figures 5a and 5b relate to corresponding schematic views of the way the differential function is exploited according to the present invention; and
figures 6a to 6c relate to corresponding examples wherein the differential module according to the present invention is exploited and/or implemented in a vehicle.

### DETAILED DESCRIPTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather the described illustrative embodiments merely exemplify the various aspects of the present invention, the scope of which is defined by the appended claims.

As apparent from the disclosure given above, the present invention is understood to be particularly advantageous when used for application in the automotive field; in particular, the present invention is understood to be particularly advantageous when applied to wheeled vehicles comprising at least two wheels. For this reason, examples will be given in the following in which corresponding embodiments of the differential module according to the present invention are described in combination with the wheels and/or other component parts of a wheeled vehicle and are used to drive the wheels of a vehicle. However, it has to be noted that the preset invention is not limited to the particular case of a differential module for a wheeled vehicle but can be used in any other situation in which two rotatable means need to be independently driven and/or rotated and/or in all those situations in which two rotatable means are rotated and/or driven by corresponding electric motors and the need arises for transferring electrical power between said two motors. Accordingly, it will become apparent from the following disclosure that the present invention may also be used for other applications, in particular for other automotive applications, for instance, in combination with gear and driving systems. It has, therefore, to be understood that the present invention is applicable for transferring electrical power between two electric motors in all those cases in which these two motors need to be driven independently and separately.

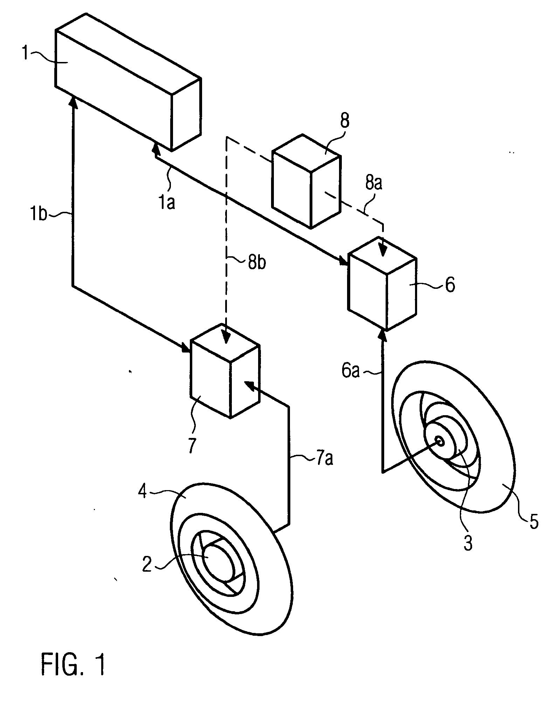

In the following, with reference to figure 1, a first embodiment of the electromechanical differential module (in the following also referred to as electromechanical module or simply as module) according to the present invention will be described. In particular, in figure 1, references 4 and 5 identify two wheels respectively, of a wheeled vehicle; for the sake of clarity, other component parts of said wheeled vehicle are not depicted in figure 1. The wheels 4 and 5 of figure 1 may either be the front wheels or the rear wheels of a four wheeled vehicle or even the wheels of a three wheeled vehicle or of any other vehicle comprising, for instance, motorbikes or the like. Moreover, in figure 1, reference numerals 2 and 3 relate to corresponding electric motors mechanically coupled to the wheels 4 and 5, respectively; as apparent from figure 1, in the embodiment depicted therein, the two electric motors 2 and 3 are received inside the hubs of the wheels 4 and 5. However, as it will become apparent from the following disclosure, other solutions are possible, in order to mechanically connect the electrical motors to the corresponding wheels. Still in figure 1, reference numerals 7 and 6 identify two corresponding power electronic units, each of said two power electronic units being connected to a corresponding one of the two electric motors 2 and 3 through electrical connections 7a and 6a, respectively. The two power electronic units 6 and 7 are also connected to storage means 1 through electrical connections 1 a and 1b, respectively; the storage means 1 are adapted to store electrical power and may comprise, for instance, a common battery pack of the kind known in the art. To this end, either the main battery pack of the vehicle may be used or, alternatively, an additional battery pack. Finally, as apparent from figure 1, the two power electronic units 6 and 7 are connected through electrical connections 8a and 8b, respectively, to a control unit 8 adapted to control the functions of the two power electronic units 6 and 7.

The main purpose of the electromechanical module depicted in figure 1 is that of allowing the two wheels 4 and 5 to be driven independently and separately; to this end, electrical power may be independently and separately supplied to the two electric motors 2 and 3. In particular, in the embodiment of figure 1, electrical power stored in the storing means 1 may be supplied to the electric motor 2 through the electrical connection 1b, the power electronic unit 7 and the final electrical connection 7a. In the same way, electrical power may be supplied from the storing means 1 to the electric motor 3 through the electrical line 1 a, the corresponding power electronic unit 6 and the final electrical connection 6a. This configuration allows the two wheels 4 and 5 to be driven separately and independently from each other; for instance, one of the two wheels 4 and 5, let us say the wheel 4, may be driven by supplying electrical power to the corresponding motor 2, whilst no electrical power is supplied to the electric motor 3 so that the wheel 5 is not driven. The contrary situation is also possible, namely the situation in which electrical power is supplied to the electric motor 3 and not to the electric motor 2, with the result that the wheel 5 is driven whilst the wheel 4 is not driven. Moreover, it is also possible to supply contemporarily the two electric motors 2 and 3 with electrical powers of corresponding different intensity, thus resulting in different mechanical torques being applied to the wheels 4 and 5. The supply of electrical power to one or both of the electric motors 2 and 3 is controlled by the control unit 8 in cooperation with the power electronic units 7 and 6, respectively. To this end, sensing means (not depicted in figure 1) may also be used, with said sensing means being adapted to collect data relating to the driving conditions and/or the behavior of the vehicle, in particular of the two wheels 4 and 5. The data collected are supplied to the control unit 8 which, in turn and as a function of the data collected, controls the function of the power electronic units 7 and 6, thus controlling the supply of the electrical power from the storage means 1 to the two electric motors 2 and 3, respectively. It is also possible to use the two electric motors 2 and 3 as electrical power generating means so as to recharge the storing means 1; for instance, in case of braking of one or both of the two wheels 4 and 5, the energy generated may be supplied from one or both of the electric motors 2 and 3 to the storing means 1 through the power electronic units 7 and 6. The storing means may, therefore, be recharged and the stored energy and/or electric power may be used for the purpose of driving the two electric motors 2 and 3. The electromechanical module of figure 1 also allows electrical power to be transferred from one of the two electric motors 2 and 3 to the other one of said two motors, thus allowing mechanical torque to be transferred from one of the two wheels 4 and 5 to the other one of said two wheels; in particular, in the case of the module depicted in figure 1, the electrical power generated by the two electric motors 2 and 3 is first supplied to the storing means 1 where said electrical power is kept at disposal for the purpose of driving said two motors. As soon as the need arises, electrical power is supplied to either one or both of the two motors 2 and 3. It appears, therefore, clearly that the two electric motors 2 and 3 may be driven independently and separately, thus allowing corresponding different mechanical torques to be supplied to the two wheels 4 and 5. Assuming that the electromechanical module of figure 1 is exploited in a vehicle driven by a main engine, for instance a combustion engine acting on the front wheels, the electromechanical module of figure 1 may be used for operating the rear wheels; however, the situation is also possible, wherein the rear wheels are driven by the main engine whilst the electromechanical module of figure 1 is used for operating the front wheels. Moreover, it is also possible to use the module of figure 1 to additionally actuate (i.e. by means of the two additional electric motors 2 and 3) the wheels driven by the main engine, namely either the front or the rear wheels. Independently thereon which wheels are operated by the main engine and the electromechanical module of figure 1, the operation of said electromechanical module when exploited in a vehicle may be summarized as follows. In normal driving conditions, the two electric motors 2 and 3 remain inoperative whilst the vehicle is driven by the main engine. When the driving conditions change, for instance, when cornering fast, when obstacle are to be avoided or in the case of slippery conditions due to snow, ice, rain or the like, operation of one or both of the electric motors 2 and 3 may be requested, for instance due to corresponding signals supplied by the control unit 8 to one or more of the power electronic units 7 and 6 as a function of data relating to the driving conditions collected by the sensing means and supplied to the control unit 8. Accordingly, only one of the two electric motors 2 and 3 may be supplied with electrical power, thus, resulting in only one of the two wheels 4 and 5 being supplied with mechanical torque and therefore, being driven. Alternatively, driving torques of different intensities may be sent to the two wheels 4 and 5, with said two wheels 4 and 5 being, therefore, driven differently. The same electrical torque may, however, also be sent to the two electric motors 2 and 3, resulting in the two wheels 4 and 5 being driven the same way or, alternatively, the two electric motors may even be operated so as to brake a wheel while giving traction to the other, resulting in one of the wheels being driven in a different direction to the other.

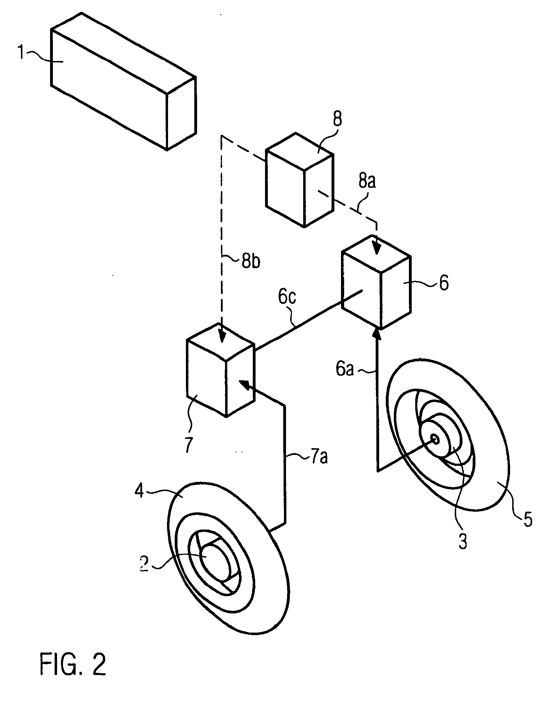

With the embodiment disclosed above with reference to figure 1, electrical power may be reciprocally transferred between the two electric motors, thus resulting in corresponding mechanical torque being transferred from one motor to the other; in particular, as verified above, in the embodiment of figure 1, this is obtained by preventively storing the electrical power generated by one or both of said two motors in the storing means and by subsequently supplying the stored electrical powers in one or both of said electric motors. However, the need may also arise of transferring electrical power directly from one motor to the other, i.e. without preventively storing said electrical power in the storing means. An example of an electromechanical module allowing to directly transfer energy and/or electromechanical power between the two motors, thus allowing to directly transfer mechanical torque between the two corresponding wheels will be disclosed in the following with reference to figure 2, wherein component parts already disclosed with reference to figure 1 are identified by the same reference numerals.

The electromechanical module depicted in figure 2 is similar to that disclosed above with reference to figure 1 but differs from the module of figure 1 in that, in the module of figure 2, the two power electronic units are directly connected through one or more by pass connecting lines 6c, essentially adapted to allow electrical power or energy to be directly transferred between said two power electronic units 7 and 6. The two power electronic units 7 and 6 are still connected through connecting lines 8b and 8a to a control unit 8 adapted to control the functioning of the two power electronic units 7 and 6, i.e., in particular, the energy transfer between said two power electronic units 7 and 6. Accordingly, in a way similar to that of the electromechanical module disclosed above with reference to figure 1, electrical power or energy may be transferred between the two electric motors 2 and 3, this resulting in turn in the possibility to transfer mechanical torque between the two wheels 4 and 5. Again, sensing means (not depicted in figure 2) may be provided for the purpose of collecting data relating to the driving condition and/or the dynamical behavior of the vehicle, and supplied to the control unit 8 from which corresponding signals are supplied to the two power electronic units 7 and 6, so as to control the transfer of electronic power therebetween as a result of the data collected by said sensing means. The most important advantage offered by the electromechanical module of figure 2 with respect to the electromechanical module of figure 1 relates to the fact that the energy used for the active differential function, i.e. for activating the two electric motors 2 and 3 so as to drive correspondingly the two wheels 4 and 5 is easily managed by the control unit 8 without involving other parts of the electromechanical module and/or of the vehicle such as, for example, the storing means or battery pack 1. This allows, in particular, to increase the efficiency of the energy exchange in the electromechanical module. The purpose of said storing means 1 may, therefore, be limited to that of supplying electrical power to the control unit 8 through connecting lines not depicted in figure 2. Electrical power is, therefore, collected from one of the two motors (either the motor 2 or the motor 3) and directly transferred to the other motor, without temporarily storing said electrical power; accordingly, the electrical power transferred essentially corresponds to the electrical power generated by the motor from which said electrical power is collected, for instance during breaking of one of the two wheels. It is also possible to provide dissipating means (not depicted in figure 2) between the two reversible power electronic units 7 and 6 for the purpose of passively dissipating the electrical power generated by the two motors 2 and 3; in fact, the situation may arise in which the electrical power requested for activating one electrical motor is less than the electrical power generated by the other motor. Accordingly, at least part of the electrical power generated by said motor and collected from said motor must be partially dissipated; as stated above, this can be obtained by means of dissipating means provided between the two power electronic units 7 and 6. For instance, said dissipating means may comprise electrical resistors or the like.

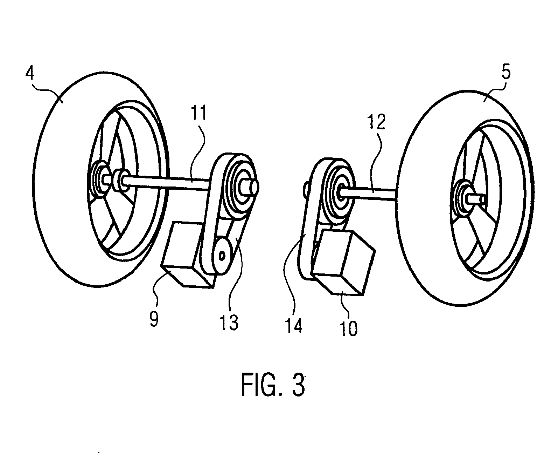

In the two embodiments of the electromechanical module according to the present invention disclosed above with reference to figures 1 and 2, the two electric motors 2 and 3 are provided in the hubs of the wheels 4 and 5; however, other solutions are possible in order to position the two electric motors with respect to the wheels as well as with respect to the other component parts of the module. One of these solutions will be disclosed below with reference to figure 3, wherein, as usual, component parts already described with reference to previous claims are identified by the same reference numerals as well.

In particular, in figure 3, reference numerals 11 and 12 identify two corresponding drive shafts mechanically coupled to the wheels 4 and 5, respectively. Moreover, reference numerals 9 and 10 identify corresponding electric motors, wherein the electric motor 9 is mechanically coupled to the drive shafts 11 through transmission means 13 while the electric motor 10 is mechanically coupled to the drive shaft 12 through transmission means 14. In the particular embodiment of figure 3, said transmission means 13 and 14 comprise essentially two drive belts; however, other solutions are also possible such as, for instance gearboxes or the like. The solution depicted in figure 3 may replace those depicted in figures 1 and 2 in all those situations in which keeping the overall dimensions of the electromechanical module as small as possible is not really mandatory. In fact, whilst on the one hand, the embodiments of figures 1 and 2 may be preferred for the purpose of better integrating the electromechanical module into the vehicle, the embodiment of figure 3 offers evident advantages in terms of dynamic behavior of the wheels. This in particular, is due to the fact that the introduction of the drive shafts 11 and 12 reduces the unsprung mass of the wheels. Moreover, electric motors with smaller torque and, accordingly, with lighter mass, can be adopted. As stated above, this solution may result in being less integrated into the vehicle than the solutions depicted in figures 1 and 2, but, on the other hand, the presence of the drive shafts allows to place the electric motors far away from the wheels with an optimum utilization of the volume of the vehicle. Accordingly, the disadvantages affecting the embodiment of figure 3, essentially due to the decreased efficiency of the power transmission may be compensated by the more flexible reciprocal disposition of its component parts.

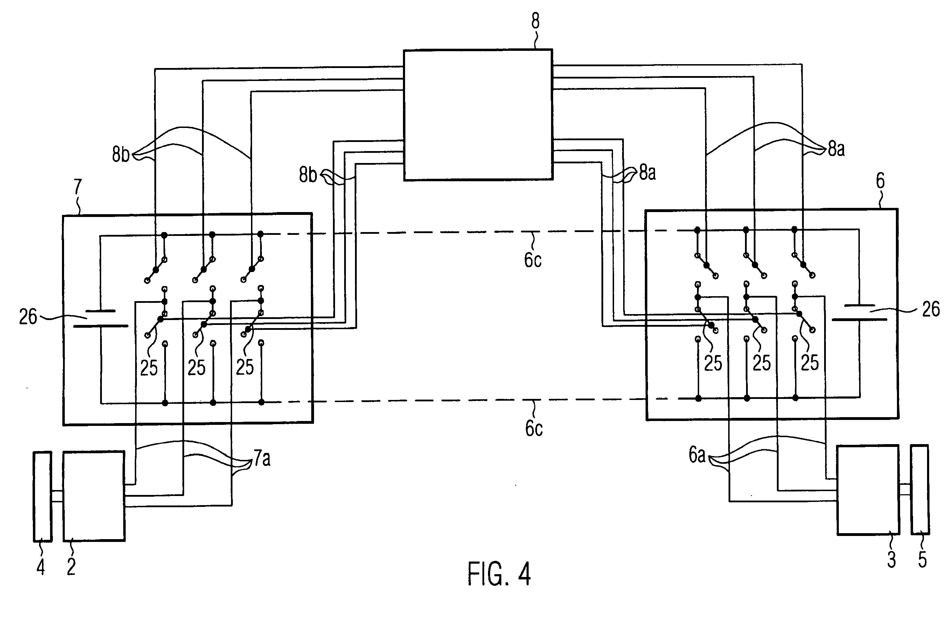

In the following, with reference to figure 4, an example of a possible electrical layout of the electromechanical module of figure 2 will be disclosed; also in the case of figure 4, those component parts already disclosed above with reference to previous figures are identified by the same reference numerals.

As apparent from figure 4, each of the two power electronic units 7 and 6 comprises a plurality of switching devices 25 connected in parallel and a capacitor bank 26 also connected in parallel with said plurality of switching devices 25; in the particular embodiment depicted in figure 4, each switching device 25 comprises two switching means connected in series. For instance, said switching means may comprise bipolar transistors, mosfet transistors or the like. The functioning of the switching devices 25, in particular, the functioning of the switching means is controlled by the control unit 8 through connecting lines 8b and 8a, through which each single switching means may be activated, i.e. switched on or switched off. Moreover, each switching device of the power electronic unit 7 is connected through connecting lines 7a with the electric motor 2 which is, in turn, mechanically connected and/or coupled with a corresponding wheel 4. In the same way, each switching device 25 of the power electronic unit 6 is connected with the electric motor 3 through a corresponding connecting line 6a, with said motor 3 being mechanically coupled or connected with a corresponding wheel 5. Moreover, the two power electronic units 7 and 6 are reciprocally connected through the connecting lines 6c (represented in figure 4 by the dashed lines); in particular, as depicted in figure 4, the electrical assemblies of each power electronic unit, namely the assemblies comprising the capacitor bank 26 and the switching devices 25 are reciprocally connected through the connected lines 6c.
The functioning of the module depicted in figure 4 may be summarized as follows where, for reasons of clarity, it will be assumed that electrical power is collected from the motor 2 and transferred at least partially to the electric motor 3.
As soon as the need arises of collecting electrical power from the electric motor 2, for instance due to particular driving conditions and/or behavior of the vehicle sensed by sensing means provided to this end (not depicted in figure 4) the switching means of the power electronic 7 are switched on as a result of signals supplied by the control unit 8 to the power electronic unit 7 through the connecting lines 8b; this results in a direct current being generate and the capacitor bank 26 being loaded accordingly, so that an electrical voltage is generated at both ends of the capacitor bank 26. Due to the connecting lines 6c, the capacitor bank 26 of the power electronic unit 6 is also loaded so that the same voltage arising at both ends of the capacitor bank 26 of the power electronic unit 7 also arises at both ends of the capacitor bank 26 of the power electronic unit 6. Accordingly, if the switching means of the switching devices 25 of the power electronic unit 6 are also switched on (for instance, due to corresponding signals supplied by the control unit 8 to the switching devices 25 through the connecting lines 8a) electrical current generated as a result of the voltage at both ends of the capacitor bank 26 of the power electronic unit 6 may be transferred to the electric motor 3 through the connecting lines 6a, resulting in a mechanical torque being applied to the wheel 5.
The electrical layout disclosed above with reference to figure 4 has been revealed to be particularly advantageous in the case of three phase electric motors working with alternative current ; however, the same working principle may be applied in the case of other solutions such as, for example, mono phase motors working with direct current. In the same way, a different number of switching devices and/or switching means may be used according to the circumstances. It has, however, to be noted that, as stated above, dissipating means or equivalent means may be provided between the two power electronic units or at least partially dissipating the energy connected from one motor in the case that the collected electrical power does not need to be entirely transferred to the other motor.

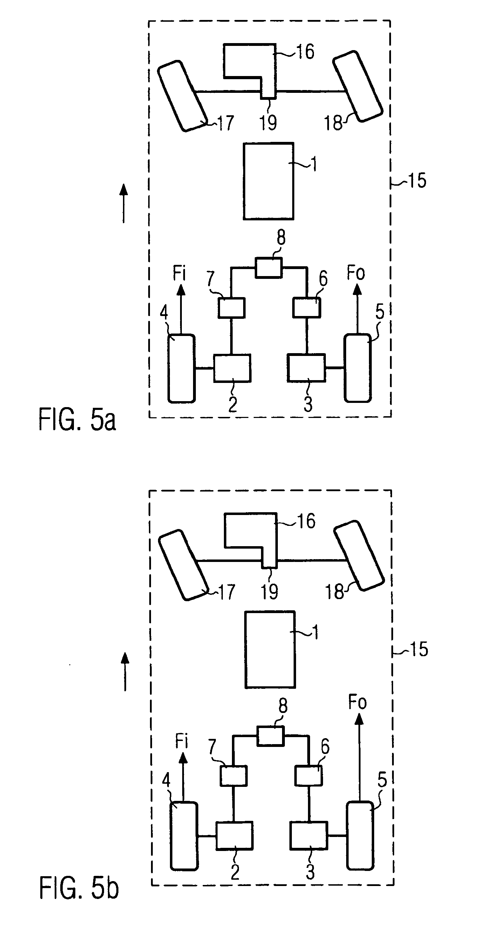

In the following with reference to figures 5a and 5b, the advantages arising when exploiting the electromechanical module according to the present invention in a vehicle will be further explained; in particular, in figures 5a and 5b, it is assumed that the module according to the present invention (comprising two electric motors 2 and 3, the power electronic units 6 and 7 as well as the control unit 8 and the storing means 1) is applied to the rear wheels 4 and 5 of said vehicle 15, whilst the front wheels 17 and 18 of said vehicle 15 are driven by a main engine 16 (for instance a combustion engine) through a mechanical differential 19. The driving direction of the vehicle 15 is identified in figures 5a and 5b by the corresponding arrows; moreover, in figures 5a and 5b, it is also assumed that a left cornering has to be performed (see in particular, the front wheels 17 and 18). It has however to be noted that the same consideration as pointed out below, however, also applies to the case of a right cornering.

In the case of a left cornering as schematically depicted in figures 5a and 5b, the rear wheel 4 tracking the inside part of the turn is subjected to a vertical load that is smaller than that on the outside wheel 5. Accordingly, if the inner wheel 4 and the outer wheel 5 would simply be driven by the two corresponding motors 2 and 3, or in other words, if the same electrical current would be supplied to the two electric motors 2 and 3, the same torque would be supplied to the two wheels 4 and 5, accordingly. Moreover, the longitudinal force Fi developed by the inner wheel 4 would be the same as the force Fo generated by the outer wheel 5 (see figure 5a)and the inner wheel 4 would reach limit slip conditions earlier than the outside wheel 5 . However, with the electromechanical module according to the present invention this problem can be overcome since, as stated before, electrical power can be collected from the motor 2 and transferred to the motor 3, resulting in less electrical current being supplied to the electric motor 2 than to the electric motor 3 and, accordingly, in mechanical torque being transferred from the inside wheel 4 to the outside wheel 5. Accordingly, the longitudinal force developed by the inner wheel 4 is smaller than that developed by the outer wheel 5 (see figure 5b). As the inner wheel 4 is subjected to a vertical load smaller than that acting on the outer wheel 5 the larger longitudinal force Fo generated by the outer wheel 5 allows limit slip conditions being reached at essentially the same time on both the inner wheel 4 and the outer wheel 5, thus resulting in the traction capability of the two wheels being optimized. Moreover, as the longitudinal force Fo is larger on the outer wheel 5, a jaw moment is generated in the same direction of the jaw speed of the vehicle 15. A directional control is therefore obtained, not only by means of the lateral forces but also of the longitudinal ones, with corresponding improvements in the cornering performances and the directional safety of the vehicle. As stated above, this situation is schematically depicted in figure 5b in which the longitudinal force Fo developed by the outer wheel 5 is larger than that generated by the inner wheel 4.

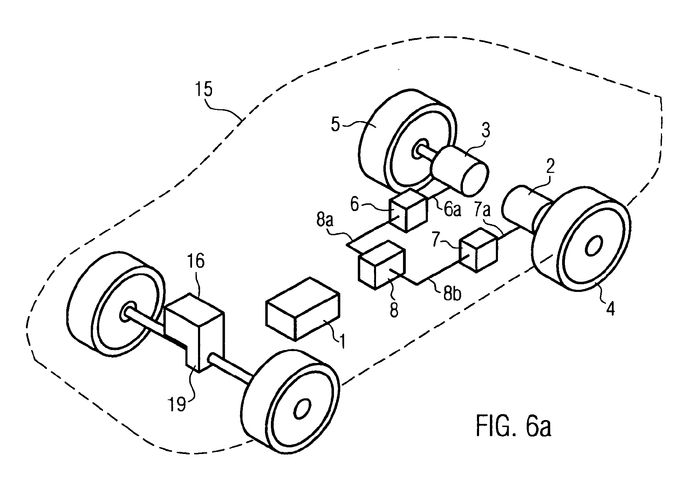

In the following, with reference to figures 6a to 6c, corresponding examples will be disclosed of the way the electromechanical module according to the present invention may be exploited in a vehicle. In all the examples depicted in figures 6a to 6c, the electromechanical module according to the present invention comprises the two electric motors 2 and 3, the control unit 8 and the power electronic unit 6 and 7 and the corresponding connecting lines 8a, 8b, 6a and 7a. Moreover, the battery pack 1 depicted in figures 6a to 6c may either represent an additional battery pack especially dedicated to the electromechanical module or even the main battery pack of the vehicle.

In the particular example depicted in figure 6a, the electromechanical module is applied to the rear wheels 4 and 5 of the vehicle 15 in a way similar to that depicted above with reference to figures 5a and 5b, i.e., with the front wheels of said vehicle being driven by a main engine 16 (for instance a combustion engine or even a main electric motor) through a mechanical differential 19. Accordingly, the same considerations as pointed out with the disclosure given above with reference to figures 5a and 5b also apply to the example depicted in figure 6a. Additionally, it may be said that this way of exploiting the electromechanical module according to the present invention, allows to realize a four wheeled hybrid vehicle without any need of modifying the power train of the vehicle. The rear wheels 4 and 5 may, therefore, be used for improving the traction capability of the vehicle under normal driving conditions and for improving the performances of the vehicle under difficult conditions such as, for instance, during cornering or during driving on ice or snow.

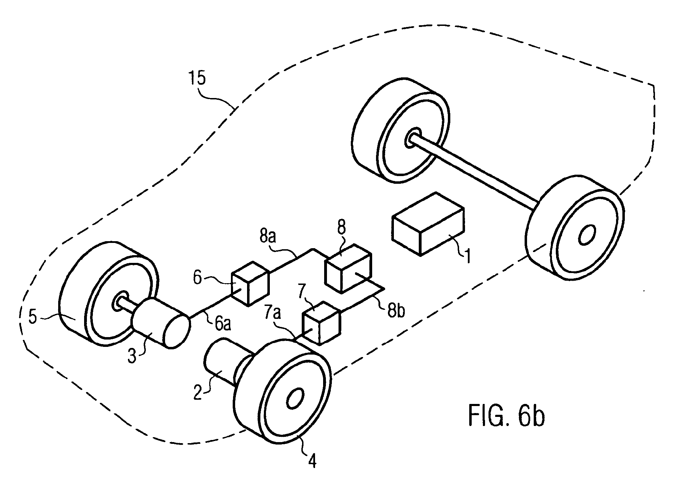

In the case of the example depicted in figure 6b, the vehicle 15 is not provided with a main engine but the traction is obtained by means of the two electric motors 2 and 3; accordingly, a thoroughly electric vehicle is obtained, with all the advantages offered by the electromechanical module of the present invention.

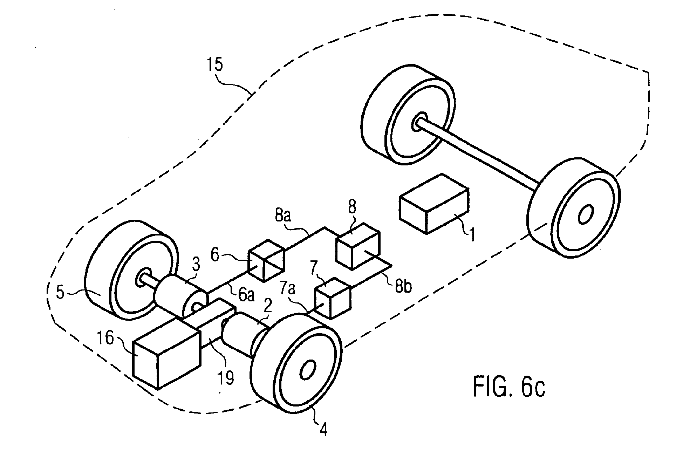

Finally, in the example depicted in figure 6c, the electromechanical module according to the present invention is applied to the front wheels 4 and 5 of the vehicle, wherein said front wheels 4 and 5 are also driven by a main engine 16 through an additional mechanical differential 19. This solution allows to improve both the traction capability and the driving performance of the vehicle.

Other ways of exploiting the electromechanical module according to the present invention are also possible in addition to those disclosed above with reference to figures 6a to 6c; for instance, the electromechanical module according to the present invention may be exploited in a three wheeled vehicle or even in vehicles comprising more than four wheels. Moreover, the electromechanical module according to the present invention may also be exploited in the case of wheeled tilting vehicles.

In conclusion, it results from the disclosure given above that the electromechanical module according to the present invention allows to overcome, at least partially, the problems affecting the prior art differential modules. In particular, the electromechanical module according to the present invention, allows the control of the traction of each single wheel, so as to implement a vehicle dynamic control, thus improving the safety of the vehicle. Moreover, exploiting the module according to the present invention in a four wheeled vehicle, allows to realize an all wheel drive vehicle with a full vehicle dynamic control that operates independently on each wheel. The exploitation of the electromechanical module according to the present invention in a three wheeled vehicle improves the safety of the vehicle in a curve, due to the two electrically driven wheels. Furthermore, the electromechanical module according to the present invention, when implemented in a two wheeled vehicle, allows to obtain traction on both wheels with corresponding advantages on the driving performances and safety. Other advantages offered by the electromechanical module according to the present invention relates to the fact that the electromechanical module according to the present invention is adapted to replace a usual mechanical differential so that a better transmission efficiency and an improved dynamic vehicle control are obtained. Furthermore, hybrid or all wheel drive vehicles of different architectures may be realized. With the electromechanical module according to the present invention, the mechanical torque may be efficiently exchanged between the two wheels disposed on a common axle; the energy taken from one wheel (for instance the internal wheel) is transferred to the other wheel (for instance the external wheel) so as accelerate it. This energy exchange may even be obtained without involving the battery so that the efficiency of the energy exchange between the wheels may be increased and the axles of the vehicle (for instance a four wheeled vehicle) may be decoupled so as to implement a vehicle dynamic control on each axle. It is also possible to adapt the electromechanical module according to the present invention for the purpose of implementing both the electric traction and differential functions. This allows, for instance, to have an all wheel drive hybrid vehicle. Finally, integrating the electric motors in the hubs of the wheels allows to obtain an improved compactness of the traction system.

Of course, it should be understood that a wide range of changes and modifications can be made to the embodiments described above without departing from the scope of the present invention. It has, therefore, to be understood that the scope of the present invention is not limited to the embodiments described but is defined by the appended claims.

## Claims

1. An electromechanical module for a wheeled vehicle (15) comprising at least two wheels (4, 5) disposed on a common axle, wherein said module comprises at least two electric motors (2, 3) each adapted to be mechanically coupled to one of said at least two wheels (4, 5) so as to drive said one wheel, said module being
**characterized in that**
it comprises means alternatively collecting electrical power during cornering from the motor connected to the internal wheel and at least partially supplying the collected electrical power directly to the motor connected to the external wheels, so as to alternatively drive said two motors.

2. An electromechanical module as claimed in claim 1,
**characterized in that**
the electrical power collected from one of said two motors and supplied to the other one of said two motors, essentially corresponds to the electrical power generated by said motor.

3. An electromechanical module as claimed in claim 1,
**characterized in that**
dissipating means are further provided for at least partially dissipating the electrical power alternatively collected from one of said two motors, so that the electrical power transferred to the other one of said two motors is less than the electrical power collected.

4. An electromechanical module as claimed in one of claims 1 to 3,
**characterized in that**
said motors are adapted to be received inside the hubs of said wheels.

5. An electromechanical module as claimed in one of claims 1 to 3,
**characterized in that**
said motors are adapted to be mechanically coupled to said wheels through corresponding transmission means (13, 14) adapted to act on corresponding driving axles (11, 12) mechanically connected to said wheels.

6. An electromechanical module as claimed in claim 5,
**characterized in that**
said transmission means comprises transmission belts.

7. An electromechanical module as claimed in claim 5,
**characterized in that**
said transmission means comprises transmission gear boxes.

8. An electromechanical module as claimed in one of claims 1 to 7,
**characterized in that**
said means for alternatively collecting electrical power from one of said two motors and for supplying the collected electrical power to the other one of said two motors comprise at least two power electronic units (6, 7), each of said at least two power electronic units being electrically connected to one of said two motors.

9. An electromechanical module as claimed in claim 8,
**characterized in that**
said at least two power electronic units are reciprocally connected through electrical connections (6c) adapted to allow electrical power to be transferred between said two power electronic units.

10. An electromechanical module as claimed in one of claims 8 and 9,
**characterized in that**
each of said two power electrical units comprises a plurality of switching devices (25) electrically connected in parallel and a capacitor bank (26) connected in parallel
with said plurality of switching devices.

11. An electromechanical module as claimed in claim 10,
**characterized in that**
said plurality of switching devices comprises a plurality of transistors.

12. An electromechanical module as claimed in claim 11, wherein said transistor devices comprises one or more of bipolar transistors, IGBTs transistors and mosfet transistors.

13. An electromechanical module as claimed in one of claims 8 to 12
**characterized in that**
it further comprises a control unit (8) electrically connected to each of said power electronic units (6, 7) and adapted to control the function of said power electronic units.

14. An electromechanical module as claimed in claim 13, when appended to one of claims 1 to 12,
**characterized in that**
the switching means of each of said two power electronic units are separately connected to said control unit through corresponding electrical connections (8a).

15. An electromechanical module as claimed in one of claims 13 and 14,
**characterized in that**
it further comprises sensing means adapted to collect data relating to the driving characteristics of the vehicle exploiting said module and to supply said data to said control unit (8).

16. An electromechanical module as claimed in claim 15, wherein said data comprise data relating to the behavior of said wheels.

17. A wheeled vehicle (15) comprising at least two wheels (4, 5),
**characterized in that**
it is equipped with an electrical module as claimed in one of claims 1 to 16, with said two motors of said module being each mechanically coupled to a corresponding one of said two wheels.

18. A vehicle as claimed in claim 17,
**characterized in that**
said vehicle is a four wheel vehicle comprising two front wheels and two rear wheels, either the front wheels or the rear wheels being driven by a main engine, and **in that** said motors of said module are mechanically coupled to the two wheels not driven by said main engine.

19. A vehicle as claimed in claim 17,
**characterized in that**
said vehicle is a four wheel vehicle comprising two front wheels and two rear wheels, either the front wheels or the rear wheels being driven by a main engine, and **in that** said motors of said module are mechanically coupled to the two wheels driven by said main engine.

20. A vehicle as claimed in one of claims 18 and 19,
**characterized in that**
said main engine is a combustion engine.

21. A vehicle as claimed in one of claims 18 and 19,
**characterized in that**
said main engine comprises a main electric motor.

22. A vehicle as claimed in claim 17,
**characterized in that**
said two motors of said module also provide the traction torques for driving said two wheels.

## Patentansprüche

1. Elektromechanisches Modul für ein Radfahrzeug (15), das wenigstens zwei Räder (4, 5) umfasst, die auf einer gemeinsamen Achse angeordnet sind, wobei das Modul wenigstens zwei Elektromotoren (2, 3) umfasst, die jeweils so eingerichtet sind, dass sie mechanisch mit einem der wenigstens zwei Räder (4, 5) gekoppelt sind, um das eine Rad anzutreiben,
wobei das Modul **dadurch gekennzeichnet ist, dass**
es eine Einrichtung zum abwechselnden Beziehen von Strom bei Kurvenfahrt von dem Motor, der mit dem inneren Rad verbunden ist, und wenigstens teilweisen Zuführen der bezogenen Strom direkt zu dem mit dem äußeren Rad verbundenen Motor umfasst, um so abwechselnd die zwei Motoren anzutreiben.

2. Elektromechanisches Modul nach Anspruch 1,
**dadurch gekennzeichnet, dass**
der Strom, der von einem der Motoren bezogen wird und dem anderen der zwei Motoren zugeführt wird, im Wesentlichen dem durch den Motor erzeugten Strom entspricht.

3. Elektromechanisches Modul nach Anspruch 1,
**dadurch gekennzeichnet, dass**
des Weiteren eine Ableiteinrichtung vorhanden ist, um den abwechselnd von einem der zwei Motoren bezogenen Strom abzuleiten, so dass der Strom, der zu dem anderen der zwei Motoren übertragen wird, geringer ist als der bezogene Strom.

4. Elektromechanisches Modul nach einem der Ansprüche 1 bis 3,
**dadurch gekennzeichnet, dass**
die Motoren so eingerichtet sind, dass sie im Inneren der Naben der Räder aufgenommen werden.

5. Elektromechanisches Modul nach einem der Ansprüche 1 bis 3,
**dadurch gekennzeichnet, dass**
die Motoren so eingerichtet sind, dass sie über entsprechende Übertragungseinrichtungen (13, 14), die so eingerichtet sind, dass sie auf entsprechende Antriebsachsen (11, 12) einwirken, die mechanisch mit den Rädern verbunden sind, mechanisch mit den Rädern gekoppelt sind.

6. Elektromechanisches Modul nach Anspruch 5,
**dadurch gekennzeichnet, dass**
die-Übertragungseinrichtungen Übertragungsriemen umfassen.

7. Elektromechanisches Modul nach Anspruch 5,
**dadurch gekennzeichnet, dass**
die Übertragungseinrichtung Übertragungsgetriebe umfassen.

8. Elektromechanisches Modul nach einem der Ansprüche 1 bis 7,
**dadurch gekennzeichnet, dass**
die Einrichtung zum abwechselnden Beziehen von Strom von einem der zwei Motoren und zum Zuführen des bezogenen elektrischen Stroms zu dem anderen der zwei Motoren wenigstens zwei Strom-Elektronikeinheiten (6, 7) umfasst, wobei jede der wenigstens zwei Strom-Elektronikeinheiten elektrisch mit einem der zwei Motoren verbunden ist.

9. Elektromechanisches Modul nach Anspruch 8,
**dadurch gekennzeichnet, dass**
die wenigstens zwei Strom-Elektronikeinheiten wechselseitig über elektrische Verbindungen (6c) verbunden sind, die so eingerichtet sind, dass sie Übertragung von Strom zwischen den zwei Strom-Elektronikeinheiten ermöglichen.

10. Elektromechanisches Modul nach einem der Ansprüche 8 und 9,
**dadurch gekennzeichnet, dass**
jede der zwei Strom-Elektronikeinheiten eine Vielzahl von Schaltvorrichtungen (25), die elektrisch parallel verbunden sind, und eine Kondensatorbank (26) umfasst, die parallel mit der Vielzahl von Schaltvorrichtungen verbunden ist.

11. Elektromechanisches Modul nach Anspruch 10,
**dadurch gekennzeichnet, dass**
die Vielzahl von Schaltvorrichtungen eine Vielzahl von Transistoren umfasst.

12. Elektromechanisches Modul nach Anspruch 11, wobei die Transistorvorrichtungen einen oder mehrere bipolare Transistor/en, IGBT-Transistor/en und MOSFET-Transistor/en umfassen.

13. Elektromechanisches Modul nach einem der Ansprüche 8 bis 12,
**dadurch gekennzeichnet, dass**
sie des Weiteren eine Steuereinheit (8) umfasst, die elektrisch mit jeder der Strom-Elektronikeinheiten (6, 7) verbunden und so eingerichtet, dass sie die Funktion der Strom-Elektronikeinheiten steuert.

14. Elektromechanisches Modul nach Anspruch 13, wenn abhängig von einem der Ansprüche 1 bis 12,
**dadurch gekennzeichnet, dass**
die Schalteinrichtungen jeder der zwei Strom-Elektronikeinheiten separat über entsprechende elektrische Verbindungen (8a) mit der Steuereinheit verbunden sind.

15. Elektromechanisches Modul nach einem der Ansprüche 13 und 14,
**dadurch gekennzeichnet, dass**
es des Weiteren eine Erfassungseinrichtung umfasst, die zum Sammeln von Daten bezüglich der Antriebscharakteristik des Fahrzeugs unter Verwendung des Moduls und zum Zuführen der Daten zu der Steuereinheit (8) eingerichtet ist.

16. Elektromechanisches Modul nach Anspruch 15, wobei die Daten Daten umfassen, die sich auf das Verhalten der Räder beziehen.

17. Radfahrzeug (15), das wenigstens zwei Räder (4, 5) umfasst,
**dadurch gekennzeichnet, dass**
es mit einem elektrischem Modul nach einem der Ansprüche 1 bis 16 ausgestattet ist, wobei die zwei Motoren des Moduls mechanisch mit einem entsprechenden der zwei Räder gekoppelt sind.

18. Fahrzeug nach Anspruch 17,
**dadurch gekennzeichnet, dass**
das Fahrzeug ein Vierradfahrzeug ist, das zwei Vorderräder und zwei Hinterräder umfasst, wobei entweder die Vorderräder oder die Hinterräder von einem Hauptmotor angetrieben werden, und dadurch, dass die Motoren des Moduls mechanisch mit den zwei Rädern gekoppelt sind, die von dem Hauptmotor nicht angetrieben werden.

19. Fahrzeug nach Anspruch 17,
**dadurch gekennzeichnet, dass**
das Fahrzeug ein Vierradfahrzeug ist, das zwei Vorderräder und zwei Hinterräder umfasst, wobei entweder die Vorderräder oder die Hinterräder von einem Hauptmotor angetrieben werden, und dadurch, dass die Motoren des Moduls mechanisch mit den zwei Rädern gekoppelt sind, die von dem Hauptmotor angetrieben werden.

20. Fahrzeug nach einem der Ansprüche 18 und 19,
**dadurch gekennzeichnet, dass**
der Hauptmotor ein Verbrennungsmotor ist.

21. Fahrzeug nach einem der Ansprüche 18 und 19,
**dadurch gekennzeichnet, dass**
der Hauptmotor einen Haupt-Elektromotor umfasst.

22. Fahrzeug nach Anspruch 17,
**dadurch gekennzeichnet, dass**
die zwei Motoren des Moduls auch die Traktionsmomente zum Antreiben der zwei Räder erzeugen.

## Revendications

1. Module électromécanique pour un véhicule sur roues (15) comprenant deux roues (4, 5) ou plus disposées sur un essieu commun, lequel module comprend deux moteurs électriques (2, 3) ou plus respectivement adaptés pour être accouplés mécaniquement avec l'une desdites deux roues (4, 5) ou plus afin d'entraîner celle-ci, ledit module étant **caractérisé en ce qu'**il comprend des moyens qui, en virage, collectent alternativement une énergie électrique à partir du moteur relié à la roue intérieure et qui fournissent au moins partiellement l'énergie électrique collectée directement au moteur relié à la roue extérieure, afin d'entraîner alternativement lesdits deux moteurs.

2. Module électromécanique tel que défini dans la revendication 1, **caractérisé en ce que** l'énergie électrique collectée à partir de l'un desdits deux moteurs et fournie à l'autre desdits deux moteurs correspond essentiellement à l'énergie électrique générée par ledit moteur.

3. Module électromécanique tel que défini dans la revendication 1, **caractérisé en ce que** des moyens dissipateurs sont également prévus pour dissiper au moins partiellement l'énergie électrique collectée alternativement à partir de l'un desdits deux moteurs, afin que l'énergie électrique transférée à l'autre desdits deux moteurs soit inférieure à l'énergie électrique collectée.

4. Module électromécanique tel que défini dans l'une quelconque des revendications 1 à 3, **caractérisé en ce que** lesdits moteurs sont adaptés pour être reçus à l'intérieur des moyeux desdites roues.

5. Module électromécanique tel que défini dans l'une quelconque des revendications 1 à 3, **caractérisé en ce que** lesdits moteurs sont adaptés pour être accouplés mécaniquement auxdites roues par l'intermédiaire de moyens de transmission (13, 14) correspondants adaptés pour agir sur des essieux moteurs (11, 12) correspondants reliés mécaniquement auxdites roues.

6. Module électromécanique tel que défini dans la revendication 5, **caractérisé en ce que** lesdits moyens de transmission comprennent des courroies de transmission.

7. Module électromécanique tel que défini dans la revendication 5, **caractérisé en ce que** lesdits moyens de transmission comprennent des boîtes de transmission.

8. Module électromécanique tel que défini dans l'une quelconque des revendications 1 à 7, **caractérisé en ce que** lesdits moyens servant à collecter alternativement une énergie électrique à partir de l'un desdits deux moteurs et à fournir l'énergie électrique collectée à l'autre desdits deux moteurs comprennent deux unités d'alimentation électroniques (6, 7) ou plus, chacune desdites deux unités d'alimentation électroniques ou plus étant reliée électriquement à l'un desdits deux moteurs.

9. Module électromécanique tel que défini dans la revendication 8, **caractérisé en ce que** lesdites deux unités d'alimentation électroniques ou plus sont reliées l'une à l'autre par l'intermédiaire de connexions électriques (6c) adaptées pour permettre un transfert d'énergie électrique entre lesdites deux unités d'alimentation électroniques.

10. Module électromécanique tel que défini dans la revendication 8 ou 9, **caractérisé en ce que** chacune desdites deux unités d'alimentation électroniques comprend de multiples dispositifs commutateurs (25) montés électriquement en parallèle et une batterie de condensateurs (26) reliés en parallèle auxdits multiples dispositifs commutateurs.

11. Module électromécanique tel que défini dans la revendication 10, **caractérisé en ce que** lesdits multiples dispositifs commutateurs comprennent de multiples transistors.

12. Module électromécanique tel que défini dans la revendication 11, **caractérisé en ce que** lesdits dispositifs à transistors comprennent un ou plusieurs transistors bipolaires, IGBT (transistors bipolaires à grille isolée) et MOSFET (transistors métal, oxyde, semi-conducteur à effet de champ).

13. Module électromécanique tel que défini dans l'une quelconque des revendications 8 à 12, **caractérisé en ce qu'**il comprend également une unité de commande (8) reliée électriquement à chacune desdites unités d'alimentation électroniques (6, 7) et adaptée pour commander le fonctionnement desdites unités d'alimentation électroniques.

14. Module électromécanique tel que défini dans la revendication 13, lorsqu'elle est combinée à l'une des revendications 1 à 12, **caractérisé en ce que** les moyens commutateurs de chacune desdites deux unités d'alimentation électroniques sont reliés séparément à ladite unité de commande par l'intermédiaire de connexions électriques (8a) correspondantes.

15. Module électromécanique tel que défini dans la revendication 13 ou 14, **caractérisé en ce qu'**il comprend également des moyens détecteurs adaptés pour collecter des données relatives aux caractéristiques d'entraînement du véhicule utilisant ledit module et pour fournir lesdites données à ladite unité de commande (8).

16. Module électromécanique tel que défini dans la revendication 15, dans lequel lesdites données comprennent des données relatives au comportement desdites roues.

17. Véhicule sur roues (15) comprenant au moins deux roues (4, 5), **caractérisé en ce qu'**il est équipé d'un module électrique tel que défini dans l'une quelconque des revendications 1 à 16, lesdits deux moteurs dudit module étant respectivement accouplés mécaniquement avec une roue correspondante desdites deux roues.

18. Véhicule tel que défini dans la revendication 17, **caractérisé en ce qu'**il s'agit d'un véhicule à quatre roues comprenant deux roues avant et deux roues arrière, les roues avant ou les roues arrière étant entraînées par un moteur principal, et **en ce que** lesdits moteurs dudit module sont accouplés mécaniquement avec les deux roues qui ne sont pas entraînées par ledit moteur principal.

19. Véhicule tel que défini dans la revendication 17, **caractérisé en ce qu'**il s'agit d'un véhicule à quatre roues comprenant deux roues avant et deux roues arrière, les roues avant ou les roues arrière étant entraînées par un moteur principal, et **en ce que** lesdits moteurs dudit module sont accouplés mécaniquement avec les deux roues qui sont entraînées par ledit moteur principal.

20. Véhicule tel que défini dans la revendication 18 ou 19, **caractérisé en ce que** ledit moteur principal est un moteur à combustion.

21. Véhicule tel que défini dans la revendication 18 ou 19, **caractérisé en ce que** ledit moteur principal comprend un moteur électrique principal.

22. Véhicule tel que défini dans la revendication 17, **caractérisé en ce que** lesdits deux moteurs dudit module fournissent également les couples de traction nécessaires pour entraîner lesdites deux roues.
